# EUROPEAN PATENT SPECIFICATION

(11) **EP 0 571 204 B1**
(45) Date of publication and mention of the grant of the patent: **17.07.1996**
(21) Application number: 93303897.8
(22) Date of filing: 19.05.1993
(51) Int. Cl.: B60C 9/20, B60C 9/22

(54) **Pneumatic vehicle tyre**
Fahrzeugluftreifen
Bandage pneumatique pour véhicule

(30) Priority: 20.05.1992 DE 4216695
(43) Date of publication of application: 24.11.1993
(73) Proprietor: SP REIFENWERKE GMBH, 63450 Hanau (DE)
(72) Inventor: Nau, Robert Berthold, W-6451 Hammersbach (DE); Lowenhaupt, Bernd, W-6140 Bensheim 1 (DE)
(74) Representative: Stewart, Charles Geoffrey

(56) References cited:
- EP-A- 0 258 822
- EP-A- 0 288 987
- EP-A- 0 329 592
- EP-A- 0 335 588
- EP-A- 0 400 859

## Description

This invention relates to a pneumatic vehicle tyre and in particular to the tread reinforcement of a radial tyre.

Such tyres have a carcass reinforcement ply and radially outside the carcass ply in the tread region a reinforcement breaker assembly. The breaker assembly comprises a breaker extending from one tyre shoulder to the other tyre shoulder and a bandage over said breaker. The bandage may be in the form of strips which overlap in a shingle-like manner in the shoulder regions.

A pneumatic vehicle tyre of this kind is, for example, known from EP-PS 0 258 822. There the strips are arranged with overlap in a shingle-like manner in both the tyre shoulder regions, whereby the layer formed by the strips in the two side regions of the tyre is reinforced in contrast to the centre of the tyre. In this way, the high speed running characteristics of the tyre are improved. It is, however, problematic in this respect because the increased material in the region of the two tyre shoulders, in contrast to the centre of the tyre, increases the flat-spot tendency of the tyre in an unfavourable manner.

From DE 39 17 735 A1 it is known to provide bandage strips in the shoulder regions of a pneumatic vehicle tyre of a material different from that used for bandage strips provided in the central region.

A tire according to the preamble of claim 1 is known from EP-A-0 288 987.

The object of the present invention is to improve such a pneumatic vehicle tyre with respect of its high speed running performance, with respect to its flat-spot behaviour and with respect to its wear behaviour and simultaneously to allow manufacture of the tyre at a more favourable cost.

According to the present invention a vehicle pneumatic tyre comprises a breaker and a bandage of reinforcement plies which extend substantially in the circumferential direction of the tyre wherein the bandage reinforcement plies consist of overlapping strips in the tyre shoulder regions, whereby a further middle bandage reinforcement ply of conventional type is provided between two bandage reinforcement plies, characterized in that the strips of the reinforcement plies comprise only a hybrid material consisting of polyaramid and polyamide and the middle reinforcement ply comprises polyamide.

Through the provision of a material combination of this kind in the jointless band reinforcement plies in the shoulder regions and the central conventional reinforcement ply, with the latter comprising a different material to the reinforcement plies material close to the shoulders, the differential loadings in the different tyre regions are taken into account. In this way, the high speed running performance can be improved.

Also in another embodiment the higher loaded tyre shoulder may be formed with a stronger reinforcement value material than the other shoulder reinforcement.

The tyre of the invention is moreover more cost favourable to manufacture than when using only one material including, for example, using a hybrid material.

Furthermore, it is possible through the material and winding combination of the invention to exercise an influence on the expansion of the tyre at higher speeds and thus to achieve an improvement in the aqua-planing behaviour, with the tyre centre growing more in the dynamic state than the shoulders. Through a suitable material combination of the material of the central reinforcement ply and the material of the reinforcement plies close to the shoulders, in particular by using in the shoulders a hybrid material of polyaramid and polyamide, the growth at the centre of the tyre can be so adjusted that centre wear is reduced despite improved aqua-planing characteristics, with the flat-spot behaviour being improved through the choice of the suitable material combination.

Further advantageous forms of the invention are set forth in the remaining claims.

The invention will now be explained, by way of example only, with reference to an embodiment and the drawings in which are shown:
Figure 1 is a cross-section through a pneumatic vehicle tyre in accordance with the invention; and
Figure 2 is a plan view of the bandage ply arrangement of the tyre of Figure 1.

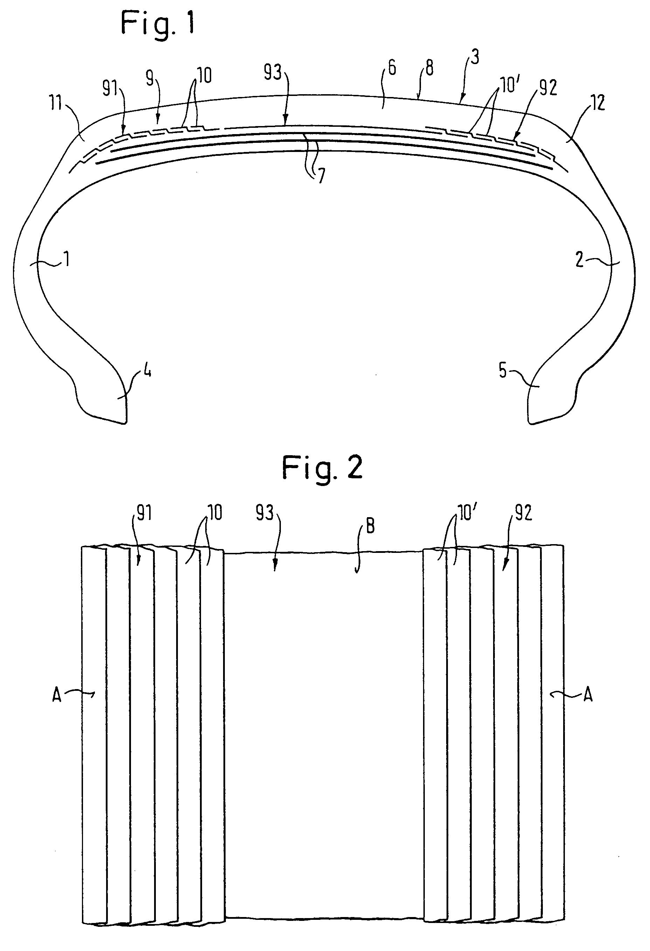

In Figure 1 the profile of a pneumatic vehicle tyre is shown comprising sidewalls 1, 2 and a rubber tread region 3. The tyre body is reinforced by a non-illustrated carcass which extends from one bead 4 to the other bead 5 and is anchored around each bead.

The tread region 3 consists of a rubber tread strip 6 having a tread pattern 8 and a two-ply breaker reinforcement 7 arranged beneath the tread strip 6 extending over the full width of the tread pattern 8 and essentially parallel thereto.

Between the tread pattern 8 and the breaker 7 and essentially parallel thereto, there is provided a reinforcing ply bandage 9 which covers the breaker 7.

The bandage 9 comprises a first reinforcement ply region 91 close to on tyre shoulder, a second reinforcement ply 92 close to the other tyre shoulder and also a central reinforcement ply region 93. The central ply region 93 consists of a different material to the reinforcement ply regions 91,92. In particular, the reinforcement ply regions 91 or 92 comprise a winding of a single band of several cords lying alongside one another. The band is helically wound in such a way that the neighbouring windings 10,10' overlap in a shingle-like manner. The band of the reinforcing ply 91 is preferably wound, starting in the transition region from the tread strip 6 to the sidewall 1 essentially in the circumferential direction of the tyre, to the edge of the central reinforcement ply. The other reinforcement ply 92 is helically wound, starting at the other edge of the central reinforcement ply 93, essentially in the circumferential direction of the tyre to the outer tyre shoulder 12, i.e. to the junction region of the tread strip 6 and the sidewall 2.

Instead of using in each case a single helically wound band for the reinforcement close to the shoulders, it is possible to use circumferentially extending strips 10 which are separate from one another and are laterally displaced relative to one another so that the desired overlap results.

The width of the reinforcing ply regions 91 and 92 in each shoulder respectively amounts to approximately one quarter to one third of the tread width, whereas the width of the central reinforcement ply amounts to approximately one third to one half of the tread strip width. The central reinforcement ply 93 consists in this arrangement of a conventional bandage ply.

The two outer reinforcement plies 91,92 consist of a first material A, whereas the central reinforcement ply 93 consists of a second material B. The material combination comprises for A a hybrid cord of polyaramid and polyamide, and for B polyamide. In this way, the higher loaded tyre shoulders are reinforced by material of greater strength.

For the manufacture of a reinforcing ply arrangement of this kind, one can use a winding device provided with two winding heads which are equipped with the bands for the winding of the shoulders.

Another feature of the invention provides for one shoulder reinforcement 91 to have a different strength to the other shoulder reinforcement 92. This may be achieved by different cord constructions and/or end counts for the winding or by using different reinforcement material combinations, e.g. in one shoulder a higher polyaramid content. Suitable tenacity ranges for the two shoulders are 48N-480N and 80N-800N.

## Claims

1. A vehicle pneumatic tyre comprising a breaker (7) and a bandage (9) of reinforcement plies (91,92) which extend substantially in the circumferential direction of the tyre wherein the bandage reinforcement plies (91,92) consist of overlapping strips in the tyre shoulder regions, whereby a further middle bandage reinforcement ply (93) of conventional type is provided between the two bandage reinforcement plies (91,92), characterised in that the strips (10,10') of the reinforcement plies (91,92) comprise only a hybrid material consisting of polyaramid and polyamide and the middle reinforcement ply (93) comprises polyamide.

2. A pneumatic vehicle tyre in accordance with claim 1 characterised in that the reinforcement plies (91,92) close to the shoulders have a higher strength than the middle reinforcement ply (93).

3. A pneumatic tyre in accordance with claim 2 characterised in that one shoulder reinforcement ply (91) has a different strength from the other shoulder reinforcement ply (92).

4. A pneumatic tyre according to claim 3 characterised in that the tenacities of one reinforcement (91) and the other reinforcement (92) are in the ranges of 48N-480N and 80N-800N respectively.

## Patentansprüche

1. Ein Fahrzeugluftreifen mit einem Breaker (7) und einer Bandage (9) aus Verstärkungslagen (91, 92), die sich im wesentlichen in der Umfangsrichtung des Reifens erstrecken, wobei die Bandagenverstärkungslagen (91, 92) aus überlappenden Streifen in den Reifenschulterregionen bestehen und eine weitere mittlere Bandagenverstärkungslage (93) herkömmlichen Typs zwischen den zwei Bandagenverstärkungslagen (91, 92) vorgesehen ist,
dadurch **gekennzeichnet,**
daß die Streifen (10, 10') der Verstärkungslagen (91, 92) lediglich ein Hybridmaterial umfassen, das aus Polyaramid und Polyamid besteht, und die mittlere Verstärkungslage (93) Polyamid umfaßt.

2. Ein Luftfahrzeugreifen nach Anspruch 1,
dadurch **gekennzeichnet,**
daß die Verstärkungslagen (91, 92) nahe den Schultern eine höhere Festigkeit aufweisen als die mittlere Verstärkungslage (93).

3. Ein Luftreifen nach Anspruch 2,
dadurch **gekennzeichnet,**
daß die eine Schulterverstärkungslage (91) eine Festigkeit aufweist, die sich von jener der anderen Schulterverstärkungslage (92) unterscheidet.

4. Ein Luftreifen nach Anspruch 3,
dadurch **gekennzeichnet,**
daß die Zähigkeiten der einen Verstärkung (91) und der anderen Verstärkung (92) in den Bereichen 48N-480N bzw. 80N-800N liegen.

## Revendications

1. Pneumatique pour véhicule comprenant une nappe sommet (7) et un bandage (9) de nappes de renforcement (91, 92) disposées pratiquement dans la direction circonférentielle du pneumatique, les nappes (91, 92) de renforcement de bandage étant constituées de rubans qui se recouvrent dans les régions d'épaulement du pneumatique, et une nappe médiane supplémentaire de renforcement de bandage (93) de type classique est placée entre les deux nappes (91, 92) de renforcement de bandage, caractérisé en ce que les rubans (10, 10') des nappes de renforcement (91, 92) sont formés uniquement d'un matériau hybride constitué de polyaramide et de polyamide, et la nappe médiane (93) de renforcement est formée de polyamide.

2. Pneumatique pour véhicule selon la revendication 1, caractérisé en ce que les nappes de renforcement (91, 92) proches des épaulements ont une résistance mécanique supérieure à celle de la nappe médiane de renforcement (93).

3. Pneumatique selon la revendication 2, caractérisé en ce qu'une nappe (91) de renforcement d'épaulement a une résistance mécanique différente de celle de l'autre nappe (92) de renforcement d'épaulement.

4. Pneumatique selon la revendication 3, caractérisé en ce que les ténacités d'un renforcement (91) et de l'autre renforcement (92) sont comprises respectivement dans les plages de 48 à 480 N et de 80 à 800 N.
